# EUROPÄISCHE PATENTSCHRIFT

(11) **EP 2 601 456 B1**
(45) Veröffentlichungstag und Bekanntmachung des Hinweises auf die Patenterteilung: **26.02.2020**
(21) Anmeldenummer: 11752502.2
(22) Anmeldetag: 04.08.2011
(51) Int. Cl.: F28D 20/00

(54) **HOCHTEMPERATUR-WÄRMESPEICHER FÜR SOLARTHERMISCHE KRAFTWERKE**
HIGH-TEMPERATURE HEAT STORE FOR SOLAR-THERMAL POWER PLANTS
ACCUMULATEUR DE CHALEUR HAUTE TEMPÉRATURE POUR CENTRALES SOLAIRES THERMIQUES

(30) Priorität: 23.12.2010 DE 102010055997; 06.08.2010 DE 102010033571
(43) Veröffentlichungstag der Anmeldung: 12.06.2013
(73) Patentinhaber: enolcon gmbh, 74321 Bietigheim-Bissingen (DE)
(72) Erfinder: SCHNEIDER, Günter, 74321 Bietigheim-Bissingen (DE); MAIER, Hartmut, 70195 Stuttgart-Botnang (DE); STENGLEIN, Martin, 74321 Bietigheim-Bissingen (DE)
(74) Vertreter: DREISS Patentanwälte PartG mbB
(86) Internationale Anmeldenummer: PCT/EP2011/063453
(87) Internationale Veröffentlichungsnummer: WO 2012/017041

(56) Entgegenhaltungen:
- WO-A1-2010/060524
- WO-A2-2008/109746
- DE-A1- 10 149 806
- DE-B3- 10 329 623
- US-A- 4 194 496
- US-A- 4 222 365
- US-A- 4 286 141

## Beschreibung

Die Erfindung bezieht sich auf einen Speicher und ein Verfahren zur großtechnischen Speicherung von thermischer Energie in Form von Hochtemperaturwärme auf einem Temperaturniveau von mindestens 280 °C.

Solarthermische Kraftwerke können ohne Speicher nur in Zeiten mit hoher direkter Sonneneinstrahlung Strom, Wärme oder Dampf produzieren. Je höher die Temperatur der von einem Verbund von konzentrierenden Solarkollektoren (nachfolgend als Solarfeld bezeichnet) bereitgestellten Wärme ist, desto besser ist der Wirkungsgrad des angeschlossen Kraftwerks. Auch in einer Meerwasserentsalzungsanlage besteht ein Bedarf an solar erzeugter Wärme mit hoher Temperatur.

In der Regel ist der solarthermische Dampferzeuger bzw. das Solarfeld überdimensioniert, damit bereits am Morgen kurze Zeit nach Sonnenaufgang entsprechende Dampfmengen zur Stromerzeugung oder zur Meerwasserentsalzung erzeugt werden können. Während der Mittagszeit wird dann meistens zu viel Dampf erzeugt, deshalb werden Spiegelflächen des Solarfelds entweder weggeklappt werden oder die überschüssige Wärme wird thermisch gespeichert.

Die Wärmespeicherung kann entweder in Kurzzeitspeichern geschehen, die in der Regel als Dampfspeicher, sogenannte Ruthsspeicher, ausgeführt werden, oder in Salzspeichern, bei denen eine Flüssigsalzlösung die zu speichernde Wärme aufnimmt. Nach Sonnenuntergang wird die in dem Kurzzeitspeicher gespeicherte Wärme über einen Wärmetauscher wieder an den Wasser-Dampfkreislauf des Dampfkraftwerks, einen Thermoölkreislauf oder eine Meerwasserentsalzungsanlage abgegeben.

Bisher bestand keine Nachfrage nach großtechnischen Wärmespeichern auf hohem Temperaturniveau, da die zentrale Anwendung in einem Solarthermischen Kraftwerk bis auf einzelne Ausnahmen in jüngerer Zeit gefehlt hat. Inzwischen nimmt die Zahl der sich im Bau befindlichen und in Betrieb gehenden Solarthermischen Kraftwerken, und damit der Bedarf nach verlässlichen und preisgünstigen thermischen Speichern mit einer großen Speicherkapazität, weltweit immer mehr zu.

Bei Betonspeichern ist der schlechte Wärmeübergang zwischen Beton und den Rohrleitungen in denen der Wärmeträger zirkuliert ein grundsätzlicher Nachteil.

PCM-Speicher ("Phase Change Material"-Speicher) stellen prinzipiell sehr interessante Speichersysteme dar. Für Hochtemperaturanwendungen über 280 °C gibt es zurzeit aber nur kleine Pilotanlagen im Kilowatt-Bereich. Dabei wird die Wärmeabgabe und -Aufnahme bei dem Wechsel der Phase von flüssig zu fest und umgekehrt bei gleicher Temperatur genutzt. Die Energiedichte ist voraussichtlich höher als bei Betonspeichern oder Salzspeichern. Von Nachteil sind die erwarteten hohen Kosten für PCM-Speicher sowie für die benötigten Metallrohre und -flächen für den Wärmeübergang. Eine große Herausforderung stellt das Beladen und Entladen des Speichers in akzeptablen Zeiten dar. Weiterhin sind Hysterese-Effekte bei den kleinen Pilotspeichern zu beobachten, die den Speicher ineffizienter machen und die nutzbare Speicherkapazität verringern. Es ist auch noch völlig unklar, inwieweit PCM-Materialien die hohe Zahl an Belade- und Entlade-Zyklen unbeeinträchtigt in ihrer Leistungsfähigkeit überstehen.

Momentan sind entsprechende Salze für PCM-Speicher vorgesehen, wie z. B. NaNO2, NaNO3 oder KNO3. Welche Materialien bei höheren Temperaturen über ca. 340 °C eingesetzt werden könnten und bei welchen Kosten, ist noch unklar. Ein Nachteil von PCM-Speichern ist die Fixierung auf bestimmte Temperaturniveaus, abhängig davon welches Material eingesetzt wird.

Ein großer Kostennachteil bei PCM-Speichern sind wie beim Betonspeicher die vielen langen und teuren Hochdruck-Dampfleitungen, die zu dem PCM-Speicher gelegt werden müssen und die durch das PCM geführt werden müssen.

In der Offenlegungsschrift DT 24 44 217 vom 1.4.1976 wird beispielsweise ausgeführt, wie Sand oder Kies als Wärmespeicher genutzt werden kann, wenn ein entsprechendes Leitungssystem durch das Wärmeenergiespeichermedium geführt wird und welche Merkmale dieses erfüllen muss. In der großtechnischen Praxis werden zur Aufnahme von entsprechenden Wärmemengen durch ein Speichermedium Sand oder Kies mehrere tausend m3 benötigt. Dieses in der DT 24 44 217 vorgeschlagene System ist in der Praxis für eine großtechnische Anwendung nicht umsetzbar, da zum einen die Kosten für das Rohrleitungssystem zu groß sind und zum anderen aufgrund des schlechten Wärmeübergangs zwischen Rohrleitungssystem und Speichermedium, sowie innerhalb des Speichermediums, die Be- und Entladezeiten viel zu groß sind. Auch bei einer optimierten Rohrleitungsanordnung, wie sie in der DT 24 44 217 beschrieben ist, sind die Belade- und Entladezeiten noch zu groß. Dieses System lässt daher deutlich schlechtere Betriebseigenschaften erwarten, als die oben beschriebenen Betonspeicher.

In der Offenlegungsschrift DE 27 31 115 vom 25.1.1979 wird ein System beschrieben, das eine Schüttung körniger Feststoffteilchen einsetzt und Naturmagnesit oder Olivin als Speichermaterial nennt. Dieses System zielt auf kleinere Anwendungen ab und hat als ein entscheidendes Merkmal, dass der Ladestrom in einem geschlossenen Kreislauf umläuft. Die Wärme wird bei diesem System nicht über einen Wärmetauscher eingebracht, sondern über elektrische Heizstäbe. Dieses System ist daher nicht für großtechnische Anwendungen mit geforderten Speicherkapazitäten von weit über 20 MWh nutzbar. Sollte man versuchen dieses System großtechnisch einzusetzen, stößt man auf das Problem, dass der Ladestrom mit der Zeit eine immer höhere Temperatur bekommt und der Druck in dem geschlossenen Ladekreislauf ansteigt. Dies erfordert eine druckfeste Auslegung des Systems und ist gleichzeitig mit hohen Kosten verbunden. Dieser Effekt des Temperatur- und Druckanstiegs hat außerdem auch negative Auswirkungen auf das Gebläse, das den Ladestrom im Kreis bewegt. Weiterhin ist die Beladung eines thermischen Speichers für ein Solarthermisches Kraftwerk über den Umweg der Stromerzeugung und des Produzierens von Wärme über Heizstäbe aufgrund des Wirkungsgradverlustes bei der Stromerzeugung nicht sinnvoll.

Aus der US 4 222 365 A ist ein Wärmespeicher bekannt, bei dem als Speichermaterial Kies oder Schotter unter anderem aus Granit oder Marmor eingesetzt wird.

Das Speichermaterial ist zusammen mit einem Gebläse, einem Wärmetauscher 48 und einem Luftkanal 56 innerhalb eines Gehäuses 46 angeordnet. Der Wärmetauscher 48 wird von einem flüssigen Alkalimetall durchströmt und gibt dort Wärme an die innerhalb des Gehäuses in einem geschlossenen Kreislauf zirkulierende Luft ab. Die solcherart aufgewärmte Luft durchströmt ein Bett aus Schotter, welches dadurch aufgeheizt wird. Beim Entladen des Speichers wird die Strömungsrichtung der Luft umgekehrt und Wärme vom dem Schotter auf die Luft und das durch den Wärmetauscher strömenden Wärmeträger ab.

Aus der WO 2010/060524 ist ein Wärmespeicher bekannt bei dem als Speichermedium mehrere von parallelen Kanälen durchzogene Festkörper eingesetzt werden. Im Zentrum des Wärmespeichers ist ein Wärmetauscher vorgesehen. Über in einem geschlossenen Kreislauf innerhalb des Wärmespeichers zirkulierende Luft wird das Speichermedium beladen und Entladen.

Nachteilig an diesem System sind die konzeptbedingt großen Außenabmessungen des Gehäuses, weil innerhalb des Gehäuses außer dem eigentlichen Speichermedium noch Luftkanäle, ein Gebläse und ein Wärmetauscher untergebracht werden müssen. Dies erhöht die Kosten und verringert die Effizienz des Speichers.

Außerdem benötigt das aus der US 4 222 365 A bekannte System beim Entladen zwei Wärmetauscher (einen ersten Wärmetauscher innerhalb des Gehäuses und einen zweiten Wärmetauscher in einem Dampferzeuger, um die gespeicherte Wärme in einer Dampfturbine zur Stromerzeugung einsetzen zu können.
Aus der US 4, 286, 141 A ist ein Speichersystem bekannt, das mit Luft zum Beladen wird. Diese Luft wird in einem geschlossenen kreislauf geführt.

Aus der DE 101 49 806 A1 wird ein Speichermedium (Sand) zum Einspeichern von Wärme aktiv bewegt und im Gegenstrom zu heißer Luft geführt.

Aus der WO 2008/109746 A2 ist ein Speichersystem bekannt, das mit Luft als Wärmeträger arbeitet. Die Luft wird in Solarkollektoren erhitzt und dann in einen Wärmespeicher geleitet.

Grundsätzlich findet sich in der Literatur oder in Patentschriften nichts, dass auf die gestellten Anforderungen mit hoher Speicherkapazität bei hohen Temperaturen mit schnellen Belade- und Entladezeiten und hoher Zyklenzahl passt. Auch Modifikationen verwandter Anwendungen führen nicht zu einer akzeptablen Lösung.

Im Zusammenhang mit der beanspruchten Erfindung wird folgende Terminologie verwandt:

Unter einem Hochtemperatur-Wärmespeicher wird eines oder mehrere Speichermodule inklusive der zugehörigen Peripherie (Wärmetauscher, Gebläse, Leitungen, Klappen etc.) verstanden.

Ein Speichermodul umfasst ein gasdichtes Gehäuse in dessen Innerem sich ein oder mehrere Speichermedien befinden. Diese Speichermedien können über Zuleitung(en) und Ableitung(en) Be- oder Entladen werden.

Aufgabe der Erfindung ist es demnach, ein Verfahren zur Speicherung von thermischer Energie und einen Hochtemperatur-Wärmespeicher bereitzustellen, die bei hohen Temperaturen und über weite Temperaturbereiche eingesetzt werden können und bei denen die Wärme auch über viele Jahre mit vielen Belade- und Entladezyklen schnell eingetragen und auch wieder ausgetragen werden können. Gleichzeitig soll das Speichersystem niedrige Investitions- und Betriebskosten verursachen.

Die Aufgabe wird durch ein Verfahren nach Anspruch 1 bzw. durch einen Hochtemperatur-Wärmespeicher nach Anspruch 3 gelöst. Das Speichermodul ist mit einem porösen und/oder körnigen Speichermaterial, wie zum Beispiel Sand, Kies, Stein, Korund und/oder Grafit gefüllt. Dieses poröse und/oder körnige Speichermaterial nimmt die Wärme von der durchströmenden Luft sehr rasch und mit geringer Temperaturdifferenz (Grädigkeit) auf. Die Luft wird bei Umgebungsdruck bzw. bei leichten Überdrücken bewegt, so dass weder die Luftkanäle noch das Speichermodul selbst für höhere Drücke über 2 - 3 bar_{abs} ausgelegt werden müssen. Außerdem muss das zur Förderung der Luft durch den erfindungsgemäßen Hochtemperatur-Wärmespeicher eingesetzte Gebläse (Lüfter oder Ventilator) nur kalte Umgebungsluft fördern, so dass auf handelsübliche und kostengünstige Komponenten zurückgegriffen werden kann. Das senkt die Kosten und erhöht die Verfügbarkeit deutlich.

Schließlich ist dadurch auch der Bedarf an elektrischer Antriebsleistung für das Gebläse geringer, weil das Volumen der kalten Umgebungsluft sehr viel kleiner ist als das der erhitzten Luft. Dadurch werden die Betriebskosten weiter reduziert und der Wirkungsgrad des Systems erhöht.

Das Ausspeichern der Wärme (Entladen) geschieht analog, d.h. kalte Luft, bevorzugt Umgebungsluft, wird durch das Speichermedium geleitet und nimmt dabei die in dem Speichermodul vorhandene Wärme auf. Die heiße Luft wird dann über geeignete Kanäle zu einem Wärmetauscher geführt, der die Wärme wieder an eine Salzschmelze, Thermoöl oder ein anderes Medium oder vorzugsweise Wasser bzw. Dampf abgibt.

Der Vorteil dieses Systems gegenüber anderen Wärmespeichersystemen liegt darin, dass mit Sand, Kies, Stein oder Korund, und gegebenenfalls auch Grafit, sehr preisgünstige und überall erhältliche Wärmespeichermaterialien eingesetzt werden können. Diese Materialien haben eine sehr große Belade- und Entlade-Zyklenfestigkeit über weite Temperaturbereiche und können stufenlos in beliebigen technisch interessanten Temperaturbereichen eingesetzt werden. Die Wärme wird über Luft bei geringen Drücken als leicht durch Gebläse zu transportierendes Medium zum Wärmespeichermaterial gebracht, der Wärmeübergang zwischen Luft und dem Wärmespeichermaterial ist aufgrund der Umströmung des Wärmespeichermaterials sehr gut.

Bei einer vorteilhaften Ausführung wird immer nur kalte Luft mit Temperaturen unter 50 - 60 °C über das Gebläse geleitet werden, was sich sehr vorteilhaft für die Gebläseleistung und den Energieverbrauch des Systems auswirkt.

Eine weitere mögliche vorteilhafte Ausgestaltung sieht die Rückgewinnung der Restwärme des Abluftstroms vor. Das heißt der Abluftstrom gibt über einen rekuperativen oder regenerativen Luft-Luft-Wärmetauscher die vorhandene Restwärme an den kalten Luftstrom nach dem Gebläse ab. Die Wärmerückgewinnung erlaubt einen längeren Entladebetrieb und erhöht die Effizienz des Gesamtsystems. Technisch ist ein solcher Luft-Luft-Wärmetauscher einfach zu beherrschen.

In einer betrieblich optimierten Ausführung kann auch ein Teil des Luftstroms im Kreislauf geführt werden. Dies kann entweder im Rahmen des gesamten System umgesetzt werden oder auch nur durch den Wärmetauscher. Die Luftkanäle des Systems können preisgünstig aus Standardkomponenten und -Materialien gefertigt werden.

Als Wärmetauscher können marktübliche große Wärmetauschersysteme (z. B. Dampf-Luft-Wärmetauscher) oder andere modifizierte am Markt erhältliche Abhitzekesselsysteme zum Einsatz kommen. Durch den optionalen Einsatz eines Zusatzbrenners bzw. einer Zusatzfeuerung mit konventionellen Brennstoffen wie Erdgas oder Öl, kann der Belade- und vor allem Entladevorgang optimiert und betrieblich stabilisiert werden.

Grundsätzlich müssen bei diesem Verfahren bzw. System keine besonderen und kostspieligen Materialien oder Apparate eingesetzt werden. Dadurch können auch großtechnische Wärmespeichersysteme mit niedrigen Kosten realisiert werden.

Durch entsprechende Optimierungsmöglichkeiten, z. B. bei der Schichtung des Speichermediums oder die Variation der durchschnittlichen Durchmesser der Körnung des eingesetzten Speichermaterials, kann auch dieses System in der Größe und Speicherdichte in seinem geforderten Volumen und den benötigten Flächen in akzeptablen Größenordnungen gehalten werden.

Ein weiterer Anwendungsfall dieses Verfahrens bzw. Systems ist die direkte Einspeisung von aufgewärmter heißer Luft z.B. aus solaren Kraftwerken, wie z.B. Turmkraftwerken, oder die Abluft aus Heißluftturbinen oder heiße Abgase aus Gasturbinen in den Luftkanal (zweite Zuleitung) des Systems nach dem in der zweiten Zuleitung vorhandenen Gebläse.

Dabei kann auf einfache Weise und ohne Beeinträchtigung des Gebläses, die entsprechende Wärme in das Speichersystem eingetragen werden. Je nachdem welche Parameter bzgl. Temperatur und Drücken eingestellt werden, kann das Gebläse entsprechend gefahren werden und fördert dabei einen entsprechenden Luftstrom aus der Umgebung, der sich dann mit den zugeführten Strömen mischt. Dabei ist sogar der Fall denkbar, dass das Gebläse nicht benötigt wird, wenn beispielsweise die Abgastemperatur einer Gasturbine groß genug ist und ein entsprechend hoher Abgasdruck vorhanden ist, der ausreicht den Druckverlust durch das Speichersystem zu überwinden.

Grundsätzlich kann damit auch im Industriebereich über dieses System die Wärme aus warmen bzw. heißen Abluftströmen noch sinnvoll gespeichert bzw. eingesetzt werden.

Inwiefern bei diesen Anwendungsfällen ein Luft-Luft-Wärmetauscher zur Rückgewinnung der Restwärme, wie in einem vorhergehenden Abschnitt beschrieben, zur Optimierung beitragen kann, und wo dieser dann installiert wird, hängt von den jeweiligen Parametern ab.

Die Einhaltung von entsprechenden Regeln und Vorschriften bzgl. Emissionen, stellen bei diesem Verfahren bzw. System bei der Nutzung von Abgasen aus Verbrennungen, wie z. B. einer Zusatzfeuerung oder bei der Nutzung von Gasturbinenabgasen, kein Problem dar.

Je nach Anwendungsfall und Anforderungen an die Lufttemperatur kann auch das Speichermaterial hinsichtlich Material und/oder Schichtaufbau optimiert werden. Diese Optimierung kann zum Beispiel vorsehen, dass man für eine Schicht des Speichermaterials anstelle von Sand, Kies, Korund oder Grafit, geschlossene Kugeln einsetzt, die mit einem Phasenwechselmaterial (PCM) gefüllt sind. Bei einer solchen Ausführung können die Vorteils des Wärmespeichers (z. B. hohe Eintrittstemperaturen beim Beladen, günstiger Wärmeübergang und der Einsatz kostengünstiger Materialien) mit den Vorteilen von PCM für eine derartige Anwendung (nämlich eine weitgehend stabile Temperatur am Luftaustritt) kombiniert werden. Die stabile Temperatur am Luftaustritt bringt bei vielen nachgelagerten Prozessen (Dampferzeuger etc.) Vorteile in der Betriebsführung und Auslegung der Komponenten.

Zur Realisierung eines Hochtemperatur-Wärmespeichers hat es sich als vorteilhaft erwiesen, das in dem oder den Speichermodulen befindliche Speichermaterial in Form einer Speicherfläche anzuordnen, die beispielsweise wie eine Trennwand zwischen Boden und Decke des Gehäuses angeordnet sein kann. Die Speicherfläche kann aber auch waagerecht/horizontal angeordnet sein. Dadurch werden mehrere positive Effekte erreicht.

Erstens wird durch die Anordnung des Speichermaterials in Form einer oder mehrerer Speicherflächen dafür gesorgt, dass der Strömungswiderstand für den Wärmeträger beim Durchströmen der Speicherflächen sehr gering wird. Dies ergibt sich einmal daraus, dass eine Eintrittsfläche und eine Austrittsfläche der mindestens einen Speicherfläche sehr groß ist, verglichen mit dem Strömungsquerschnitt in der Zuleitung bzw. in der Ableitung. Daher strömt der Wärmeträger mit einer sehr geringen Geschwindigkeit durch die mindestens eine Speicherfläche und es entstehen nur sehr geringe Druckverluste beim Durchströmen der mindestens einen Speicherfläche.

Ein weiterer wichtiger Effekt ist darin zu sehen, dass die Speicherfläche in Strömungsrichtung des Wärmeträgers relativ dünn ist, so dass der Wärmeträger nur einen kurzen Weg durch die Speicherfläche zurücklegen muss. Auch dies führt zu verringerten Druckverlusten. Weil jedoch der Wärmeträger, wie bereits erwähnt, mit sehr geringer Strömungsgeschwindigkeit durch die Speicherfläche hindurch strömt, wird trotzdem ein großer Teil der in dem Wärmeträger gespeicherten sensiblen Wärme an das Speichermaterial übertragen und somit in dem Speicher oder Speichermodul abgespeichert.

Selbstverständlich ist es auch möglich, dass der Wärmeträger auf seinem Weg von der Zuleitung zur Ableitung mehrmals durch verschiedene Speicherwände strömt. Wenn der Wärmeträger nacheinander durch mehrere z.B. auch als Kaskade angeordnete Speicherflächen strömt, dann haben die verschiedenen Speicherflächen verschiedene Temperaturen, so dass der Energieverlust minimiert wird, wenn beim Entladen des Speichers der kalte Wärmeträger in der entgegengesetzten Strömungsrichtung durch die Speicherwände strömt. Es wird nämlich dann der zunächst kalte Wärmeträger von einer Speicherwand aufgewärmt, deren Temperatur nur geringfügig größer ist als die Temperatur des kalten Wärmeträgers. Der auf diese Weise vorgewärmte Wärmeträger strömt dann durch eine zweite Speicherfläche, deren Temperatur etwas höher ist als die der ersten Speicherfläche und so weiter. Dadurch ist es möglich, ähnlich einem Gegenstromwärmetauscher, die Wärmeübertragung sowohl beim Beladen als auch beim Entladen mit einer nahezu konstanten Temperaturdifferenz zwischen dem Speichermaterial und dem Wärmeträger vorzunehmen, was die Energieverluste beim Be- und Entladen des erfindungsgemäßen Speichermoduls minimiert.

Da das Speichermodul mit einem granulatförmigen Speichermedium gefüllt ist und dieses granulatförmige Speichermedium in aller Regel riesel- oder schüttfähig ist, ist es in vielen Fällen erforderlich, dass zumindest die Eintrittsfläche und die Austrittsfläche der Speicherflächen durch ein Netz, ein Gitter, ein Lochblech, ein Vlies und/oder eine andere gasdurchlässige poröse Grenzfläche begrenzt wird. Dadurch wird gewährleistet, dass das Speichermaterial am vorgesehen Ort bleibt. Man kann sich eine Speicherwand ähnlich vorstellen, wie ein Drahtgitterkorb, der mit Steinen oder Schotter oder Kies gefüllt ist.

Selbstverständlich ist dabei darauf zu achten, dass das Netz, das Gitter, das Lochblech und/oder das Vlies dem Wärmeträger einen möglichst geringen Strömungswiderstand entgegenbringen, um die Druckverluste beim Durchströmen der Speicherfläche zu minimieren.

Es kann erforderlich sein, im Bereich der Eintrittsfläche und/oder der Austrittsfläche eine Stützstruktur vorzusehen. Diese Stützstruktur kann beispielsweise durch mehrere parallel zueinander angeordnete Metallstäben gebildet werden, die zum Beispiel ein Gitter oder ein Lochblech oder ein Vlies, welches das in den Speicherflächen befindliche Speichermaterial am Herausfallen hindert, stützt. Dabei ist selbstverständlich darauf zu achten, dass die Stützstruktur die Querschnittsfläche der Speicherfläche möglichst wenig verringert, um die erwähnten Vorteile einer niedrigen Strömungsgeschwindigkeit und geringer Druckverluste beizubehalten.

Eine diesbezüglich besonders vorteilhafte Ausgestaltung sieht vor, dass die Speicherfläche als vertikale Wand ausgebildet und dass innerhalb der Speicherflächen mehrere in vertikaler Richtung übereinander angeordnete Lamellen vorgesehen sind. Diese Lamellen können zum Beispiel aus Stahlblech hergestellt sein und dienen dazu, das Speichermaterial in seiner Position zu halten. Diese Lamellen können beispielsweise als schräggestellte Stahlbleche ausgebildet sein. Durch die schräggestellten Lamellen drückt die Schwerkraft das Speichermaterial ins Zentrum der Speicherfläche. Eine Stützstruktur an den Eintrittsflächen und an den Austrittsflächen kann dadurch entfallen. Außerdem ist in vielen Fällen ein Netz, ein Gitter, ein Lochblech oder ein Vlies an den Eintrittsflächen und an den Austrittsflächen nicht erforderlich. Dadurch wird der Strömungswiderstand der Speicherfläche nochmals reduziert und außerdem werden die Herstellungskosten verringert.

Um eine solche Speicherfläche herzustellen, genügt es, zunächst die Lamellen in einer entsprechenden Tragstruktur innerhalb des Gehäuses aufzubauen und anschließend das Speichermaterial in den zwischen den Lamellen befindlichen Raum zu schütten. Durch die nach innen geneigte Anordnung der Lamellen bildet sich dadurch eine Speicherwand.

Im Vertikalschnitt sieht diese Speicherwand aus, wie eine Vielzahl vertikal übereinander angeordneter Schüttkegel, wobei die Lamellen dafür sorgen, dass die verschiedenen Schüttkegel die gleiche Grundfläche haben, so dass sich eine vertikale Speicherwand mit in einer Näherung konstanter Wanddicke einstellt.

Eine weitere vorteilhafte Ausgestaltung sieht vor, dass die mindestens eine Speicherfläche mit Ausnahme der Eintrittsfläche und der Austrittsfläche von gasdichten Wänden begrenzt ist. Diese gasdichten Wände sind erforderlich, um zu gewährleisten, dass der Wärmeträger zwangsweise durch die Speicherfläche strömen muss und somit ein Kurzschluss zwischen der Zuleitung und der Ableitung unter Umgehung mindestens einer Speicherfläche verhindert wird. Nur dann ist gewährleistet, dass das gesamte im Speichermodul eingelagerte Speichermaterial auch zum Speichern von sensibler Wärme herangezogen wird und somit der Wirkungsgrad und die Leistungsfähigkeit des Speichermoduls hoch sind.

Als Speichermaterial kann Sand, Kies, Steine, Korund oder Graphit und/oder auch ein sogenanntes Phase-Change-Material (PCM) eingesetzt werden. Als geeignete Größe für die einzelnen Körner dieser, bis auf das möglicherweise eingesetzte PCM, granulatartigen Materialien haben sich Durchmesser von 2 mm bis 80 mm bewährt. Wenn PCM eingesetzt werden, muss dieses in geeigneten Behältern im Speicher untergebracht werden, deren Form und Größe hinsichtlich des Wärmeübergangs und der Wärmeausdehnung optimiert sind.

Grundsätzlich gilt, je kleiner der Durchmesser, desto schneller heizt sich ein solches Korn bis in den Kern auf. Allerdings werden dadurch auch die Zwischenräume zwischen den Körnern auch kleiner und infolge dessen steigt der Strömungswiderstand an. Hier gilt es entsprechend den Anforderungen des Einzelfalls einen geeigneten Kompromiss zu finden.

Es ist auch möglich, dass das Speichermaterial innerhalb einer Speicherwand horizontal oder vertikal geschichtet wird und von Schicht zu Schicht der Durchmesser des eingesetzten Speichermaterials oder das eingesetzte Speichermaterial selbst geändert wird. Dadurch können die thermischen Eigenschaften des Speichermaterials an die in der jeweiligen Zone der Speicherwand herrschenden strömungstechnischen und thermischen Bedingungen angepasst werden und dadurch eine weitere Optimierung der Leistungsfähigkeit des Speichermoduls erreicht werden.

Um zu verhindern, dass das Speichermaterial sich im Laufe der Zeit "entmischt", weil kleinere Körner des Speichermaterials der Schwerkraft folgend nach unten fallen und größere Körner oben bleiben, kann vorgesehen sein, dass innerhalb der Speicherfläche eine einen Raum bildende Struktur aus kleinen Röhrchen, Raschigringen, dreidimensionalen Gitternetzen und/oder anderen Füllkörpern angeordnet werden. Dadurch wird sichergestellt, dass das Speichermaterial sich nicht im Laufe der Zeit verdichtet und entmischt und infolge dessen der Strömungswiderstand durch die Speicherfläche in diesen Bereich mit verdichtetem Speichermaterial ansteigt.

Um das Be- und Entladen des erfindungsgemäßen Speichermoduls steuern zu können, ist in der mindesten einen Zuleitung und/oder der mindestens einen Ableitung ein Verschlussorgan, insbesondere eine Klappe vorgesehen.

Die mindestens eine Speicherfläche kann in Art einer zylindrischen Speicherwand oder spiralförmig ausgebildet sein. Dabei ist es besonders vorteilhaft, wenn mehrere zylindrische Speicherwände konzentrisch zueinander angeordnet sind. Dadurch ergibt sich bei geringem Bauvolumen des Speichermoduls eine sehr hohe Leistungsfähigkeit und gleichzeitig wird die Wärmeübertragung beim Be- und Entladen optimiert.

Selbstverständlich kann je nach Modulgeometrie die mindestens eine Speicherschicht auch als Quader, Parallelepiped, Zylinder, Hohlzylinder und/oder als Wand mit spiralförmiger Grundfläche ausgebildet sein.

Grundsätzlich ist es möglich, eine Zuleitung und eine Ableitung für den Wärmeträger an jeder beliebigen Stelle des Gehäuses anzubringen. Dabei wird man darauf achten, dass die mindestens eine Zuleitung und die mindestens eine Ableitung ein gleichmäßiges Durchströmen der Speicherflächen ermöglichen und im übrigen auch der Druckverlust des Wärmeträgers beim Durchströmen der Speicherflächen minimiert wird. Daher ist es oft sinnvoll, die Zuleitung seitlich und die Ableitung oben an dem Gehäuse des Speichermoduls vorzusehen. Selbstverständlich können die Zuleitungen und die Ableitungen jedoch auch an jeder beliebigen Stelle des Speichermoduls angebracht werden.

Um die Temperaturschwankungen für das Gehäuse beim Be- und Entladen zu minimieren hat es sich außerdem als vorteilhaft erwiesen, das Gehäuse an seiner Innenseite mit einer Schicht aus Speichermaterial zu bedecken. Damit nimmt dieses Speichermaterial an der Wärmespeicherung teil. Ein weiterer Vorteil dieser die Innenseite des Gehäuses bedeckenden Schicht aus Speichermaterial ist darin zu sehen, dass die Temperaturschwankungen für das Gehäuse gedämpft werden und dadurch die thermischen Belastungen des Gehäuses reduziert werden.

Es versteht sich von selbst, dass das Gehäuse, bevorzugt an seiner Außenseite wärmegedämmt ist, um die Energieverluste durch Abstrahlung oder Konvektion in die Umgebung zu minimieren. Das Speichermodul kann mit mehreren ähnlichen oder baugleichen Speichermodulen in Reihe oder parallel geschaltet werden. Dadurch ist es möglich, einen Hochtemperaturspeicher bereitzustellen, der nach Bedarf aus mehreren Speichermodulen zusammengesetzt wird. Dabei können die Speichermodule in standardisierten Baugrößen kostengünstig hergestellt werden. Diese modulare Bauweise vereinfacht auch den Transport zum Aufstellort.

Ein weiterer Vorteil dieser modularen Bauweise ist darin zu sehen, dass einzelne Speichermodule bei Bedarf nachträglich hinzugefügt werden können oder im Falle eines Schadens auch ausgetauscht werden können, ohne dass das Solarkraftwerk außer Betrieb gehen müsste.

Als Speichermaterial kommen Sand- oder Kies- oder Stein- oder Korund- oder Grafit oder ähnliche Materialien (z. B. PCM) oder Kombinationen davon zum Einsatz.

Der Vorteil dieser Speicherausführung gegenüber anderen möglichen Wärmespeichersystemen liegt darin, dass mit Sand, Kies, Stein oder Korund, und gegebenenfalls auch Grafit oder PCM-Materialien, sehr preisgünstiges und überall erhältliches Wärmespeichermaterial eingesetzt werden kann. Die Ausgestaltung der Speichermoduls und der Speicherflächen ermöglicht das Beladen und Entladen des Speichers mit minimalen Druckverlusten.

Der Speicher kann in verschiedenen Ausführungen gebaut werden, als vorteilhaft hat sich aber herausgestellt, die einzelnen Speichermodule in Form von Containern mit Standardmaßen auszuführen. Diese sind entsprechend einfach zu transportieren und kostengünstig herzustellen. Diese Module können aneinandergereiht oder aufeinander gestellt werden, so dass die Gesamtspeicherkapazität auf einfache Weise entsprechend vergrößert werden kann. Je nach Anwendungsfall kann es sinnvoll sein, hierfür sowohl Standard-Container-Bauformen als auch zum Beispiel Tank-Container-Bauformen einzusetzen.

An diese Speichermodule werden dann die entsprechenden Luftkanäle für die Zu- und Abluft mit Luftklappen angeschlossen. Die Speichermodule können konstruktiv so ausgeführt werden, dass die Luftkanalanschlüsse oberhalb und unterhalb oder seitlich angeordnet werden. Dies lässt eine große Flexibilität mit Blick auf den Flächenbedarf zu.

Grundsätzlich müssen bei diesem Speicher keine besonderen Materialien oder Apparate eingesetzt werden, da der Speicher auch mit Drücken unterhalb von 1,5 bar(a) betrieben werden kann. Dadurch können auch große Wärmespeichersysteme mit niedrigen Kosten realisiert werden.

Durch entsprechende Optimierungsmöglichkeiten, z. B. bei der Schichtung des Speichermediums oder die Variation der durchschnittlichen Durchmesser der Körnung des eingesetzten Speichermaterials innerhalb eines Moduls oder von Modul zu Modul, wird auch eine den Anforderungen entsprechende optimale Verschaltung ermöglicht.

Ein Betrieb bei höheren Drücken als 1,5 bar ist grundsätzlich auch möglich, es werden dabei aber deutlich höhere Investitions- und Betriebskosten erwartet.

### Zeichnung

Die Ausführungsbeispiele der Figuren 1 bis 9 fallen nicht unter den Schutzbereich der Ansprüche.
Fig. 1 zeigt das Beladen des Wärmespeichersystems
Fig. 2 zeigt das Entladen des Wärmespeichersystems
Fig. 3 zeigt das Beladen des Wärmespeichersystems, Ausführungsbeispiel mit Regelklappen 15,
Figuren 4 bis 9 zeigen Ausführungsbeispiele Hochtemperatur-Wärmespeicher und
Fig. 10 zeigt ein Blockschaltbild eines zweiten Ausführungsbeispiels des erfindungsgemäßen Hochtemperatur-Wärmespeichers.

### Beschreibung der Ausführungsbeispiele

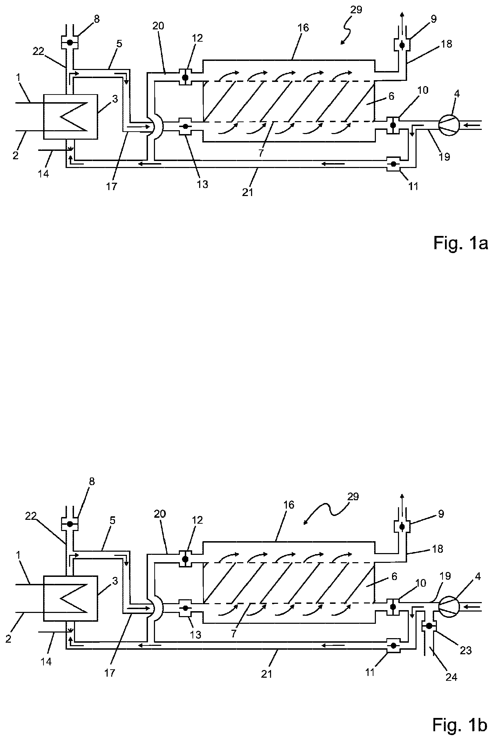

In Figur 1 a) ist eine prinzipielle Ausführungsform des Hochtemperatur-Wärmespeichers und der Betrieb beim Beladen dargestellt. Dabei wird kalte Luft aus der Umgebung mit Hilfe des Gebläses 4 über einen Luftkanal, nachfolgend auch als zweite Zuleitung 19 bezeichnet, eine Bypass-Leitung 21 und die Klappe 11 einem Wärmetauscher 3 zugeführt. Mit dem Bezugszeichen 29 wird eine Speichermodul bezeichnet. Eine Klappe 10 ist beim Beladen geschlossen.

Die überschüssige Wärme aus dem Solarfeld wird über das Wärmeträgermedium des Solarfelds, z. B. Dampf oder Thermoöl, dem Wärmetauscher 3 über eine Leitung 1 zugeführt.

Über den Wärmetauscher 3 wird die überschüssige Wärme aus dem Solarfeld auf den durchströmenden Luftstrom übertragen. Das abgekühlte Wärmeträgermedium aus dem Solarfeld verlässt den Wärmetauscher 3 über eine Leitung 2. Die aufgeheizte Luft wird über den Luftkanal 5, eine erste Zuleitung 17 und die Luftklappe 13 dem Speichermodul 29 zugeführt. Die heiße Luft wird innerhalb eines Gehäuses 16 des Speichermoduls 29 über einen größeren Querschnitt verteilt und strömt z. B. durch Lochbleche 7 oder Lanzen durch das Wärmespeichermaterial 6. Das Gehäuse 16 kann aus Metall, Beton und/oder einem anderen geeigneten Material sein und wird, falls erforderlich, mit einer Wärmedämmung versehen (nicht dargestellt).

Das Wärmespeichermaterial 6 kann auch in mehrere Schichten unterteilt sein, mit unterschiedlichen Schichtdicken, unterschiedlichen Speichermaterialien und unterschiedlichen mittleren Durchmessern des Speichermaterials. Die verschiedenen Schichten können zur Vermeidung einer Durchmischung dabei voneinander getrennt werden durch hochtemperaturfeste luftdurchlässige Vliese oder Lochbleche oder Netze oder poröse Keramikstrukturen.

Die heiße Luft gibt die Wärme an das Wärmespeichermaterial 6 ab und verlässt das Speichermodul 29 über die erste Ableitung 18 und die geöffnete Klappe 9. Beim Beladen des Speichermoduls 29 sind die Klappen 8,12 und 10 geschlossen.

In Figur 1b ist ein alternatives Ausführungsbeispiel dargestellt, das zusätzlich zu den bereits im Zusammenhang mit der Figur 1a beschrieben Komponenten noch eine Leitung 24 und eine in dieser Leitung 24 angeordnete steuerbare Klappe 23 aufweist.

Über diese Leitung 24 kann, falls verfügbar, heiße Luft oder heiße Abgase aus einem vorgelagerten Prozess direkt in das Speichermodul 29 geleitet werden, so dass die darin enthaltene sensible Wärme ohne den "Umweg" über einen Luft/Luft-Wärmetauscher in dem Speichermodul 29 gespeichert werden kann.

Da die Leitung 24 stromabwärts des Gebläses 4 in die zweite Zuleitung 19 mündet, wird das Gebläse 4 nicht mit den hohen Temperaturen der in der Leitung 24 strömenden Luft oder Abgase beaufschlagt. Die Leitung 24 ermöglicht somit die Einkopplung sensibler Wärme eines gasförmigen Mediums (Luft oder Abgase) bei niedrigeren Temperaturen als im Wärmetauscher 3.

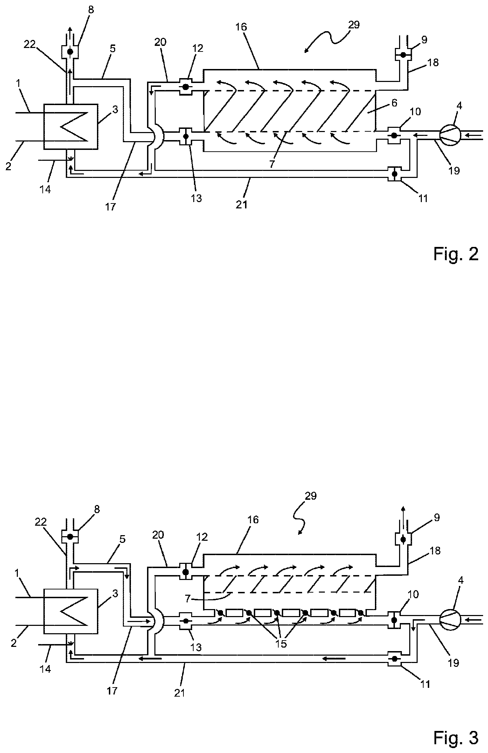

Figur 2 zeigt schematisch das Entladen des Hochtemperatur-Wärmespeichersystems nach Figur 1 a). Das Entladen des Hochtemperatur-Wärmespeichersystems nach Figur 1 b)erfolgt auf die gleiche weise bei geschlossener Klappe 23, so dass eine gesonderte Beschreibung entbehrlich ist.

Beim Entladen wird ebenfalls über das Gebläse 4 kalte Luft aus der Umgebung mit einer Temperatur von weniger als ca. 50° C angesaugt und durch die zweite Zuleitung 19 und die geöffnete Klappe 10 dem Speichermodul 29 zugeführt. Die Klappe 11 ist beim Entladen geschlossen.

Über Lochbleche 7 oder Lanzen wird die kalte Luft innerhalb des Gehäuses 16 verteilt und durch das Speichermedium 6 geleitet und nimmt dort die Wärme auf. Die aufgeheizte Luft verlässt dann über die zweite Ableitung 20 und die geöffnete Klappe 12 den Speicher und wird dann über die Bypass-Leitung 21 zu dem Wärmetauscher 3 geführt und erwärmt dort den in den Leitungen 1 und 2 strömenden Wärmeträger.

Der Wärmetauscher 3 kann grundsätzlich wie ein Standard-Abhitzekessel nach Gasturbinen ausgeführt sein.

Die heiße Luft gibt im Wärmetauscher 3 die Wärme an eine nachgeschalteten und nicht dargestellten Kraftwerksprozess mit einem Wasser-Dampfkreislauf ab, indem z. B. das das Wasser über Leitung 2 in den Wärmetauscher 3 geleitet wird und als Wasserdampf mit entsprechend hohen Temperaturen den Wärmetauscher 3 über die Leitung 1 verlässt.

Vor dem Wärmetauscher 3 kann noch eine Zusatzfeuerung 14 installiert werden, die zum einen dazu dienen kann die Temperatur der Luft weiter zu erhöhen und bzw. oder den Wärmeübergang im Wärmetauscher stabil zu halten. Diese Ausführung mit Zusatzfeuerung 14 ist insbesondere dann von Vorteil, wenn der Speicher so weit entladen ist, dass die Temperatur der Luft auf ein Niveau abgesunken ist, dass ein vernünftiger Betrieb des nachgeschalteten Kraftwerksprozesses nicht mehr möglich wäre.

Die detaillierte praktische Ausführung hängt von einer Vielzahl von Rahmenparametern ab. Beispielsweise kann es bei großen Speichern sinnvoll sein, die Anströmung des Speichermaterials in mehrere Abschnitte zu unterteilen und zur Vergleichmäßigung der Durchströmung einzelne ansteuerbare Klappen 15 einzubauen. Diese Regelklappen 15 werden so eingestellt, dass sich der Luftstrom und die Druckverhältnisse optimal verteilen.

Figur 3 zeigt eine entsprechende prinzipielle Ausführung beim Beladen des Speichers mit Regelklappen 15.

Auch beim Entladen können derartige Regelklappen sinnvoll eingesetzt werden, z. B. um den Speicher abschnittweise zu entladen und das Lufttemperaturniveau nach dem Speicher längerfristig stabiler auf einem hohen Niveau zu halten.

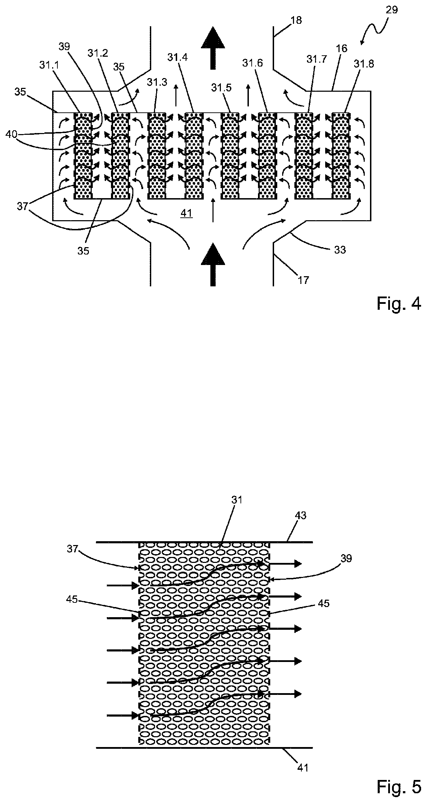

Figur 4 zeigt eine Draufsicht auf ein erstes Ausführungsbeispiel eines Speichermoduls 29. Das Speichermodul 29 besteht aus einem Gehäuse 16 in das eine Zuleitung 17 mündet. Über die Zuleitung 17 kann ein heißer Wärmeträger, wie zum Beispiel Luft, in das Innere des Gehäuses 16 gelangen. Auf der der Zuleitung 17 gegenüberliegenden Seite des Speichermoduls 29 ist eine Ableitung 18 vorgesehen, die zum Abtransport der im Speichermodul 29 abgekühlten Wärmeträgers dient.

In dem Gehäuse 16 sind insgesamt acht vertikale Speicherflächen 31.1 bis 31.8 angeordnet. Diese Speicherflächen 31 stehen parallel zueinander und sind zueinander beabstandet. Sie bestehen im Wesentlichen aus einem Speichermaterial, wie zum Beispiel Sand, Kies, Schotter oder Ähnlichem.

Die Speicherflächen 31 sind in dem dargestellten Ausführungsbeispiel als senkrechte (Speicher-)Wand ausgebildet; sie beginnen am Boden 41 des Gehäuses 16 und enden an der Decke des Gehäuses 16. Diese Decke ist in Figur 4 nicht dargestellt, um einen Blick ins Innere des Speichermoduls 29 zu erlauben.

Um den durch die Zuleitung in das Gehäuse 16 strömenden heißen Wärmeträger gleichmäßig über die gesamte Breite des Speichermoduls 29 zu verteilen, ist eine Durchmessererweiterung 33 vorgesehen, die in der Art eines Diffusors zu einer Verzögerung des durch die Zuleitung 17 einströmenden Wärmeträgers führt. Der Weg des Wärmeträgers durch das Speichermodul 29 hindurch ist mit Hilfe von einer Vielzahl von Pfeilen (ohne Bezugszeichen) angedeutet. Dabei wird deutlich, dass der Wärmeträger zwangsweise durch eine der Speicherwände 31.1 bis 31.8 strömt, um von der Zuleitung 17 zur Ableitung 18 zu gelangen.

Um dies zu erreichen, sind die Stirnseiten der Speicherwände 31 mit gasdichten Wänden 35 verschlossen. Dabei verbindet jeweils eine gasdichten Wände 35 zwei benachbarte Speicherschichten 31 miteinander. Im Fall der Speicherflächen 31.1 und 31.2 werden die Speicherflächen an dem der Zuleitung 17 zugewandten Ende gasdicht miteinander verbunden. Bei den Speicherwänden 31.2 und 31.3 werden die der Ableitung 18 zugewandten Enden der Speicherflächen durch eine gasdichte Wand 35 begrenzt.

Die Speicherwand 31.1 ist an ihrem der Ableitung 18 zugewandten Ende über eine gasdichte Wand 35 mit dem Gehäuse 16 verbunden. In ähnlicher Weise sind auch an den anderen Speicherflächen 31.3 bis 31.8 im Wechsel an den Stirnseiten gasdichte Flächen 35 angeordnet. Dadurch kann der heiße Wärmeträger aus der Zuleitung 17 nur in jedem zweiten Zwischenraum zwischen zwei Speicherflächen 31 oder einer Speicherfläche 31.1, 31.8 und dem Gehäuse 16 einströmen.

Anschließend strömt der Wärmeträger durch die Speicherflächen 31 hindurch und kann dann, auf der anderen Seite der Speicherfläche angekommen, in Richtung Ableitung 18 ausströmen. Wie man schon aus der vereinfachten Darstellung der Figur 4 erkennen kann, haben die insgesamt acht Speicherflächen 31.1 bis 31.8 mehrere für das Beladen und Entladen des Speichermaterials vorteilhafte Eigenschaften:

Die Speicherflächen 31 bilden eine sehr große Eintrittsfläche 37 und haben, da es sich um eine gerade Speicherwand 31 handelt, eine gleich große Austrittsfläche 39. Dadurch ist gewährleistet, dass der Wärmeträger mit einer sehr geringen Geschwindigkeit und somit mit geringen Druckverlusten durch die Speicherwände 31 strömen kann.

Durch die geringe Strömungsgeschwindigkeit ist die Verweildauer des Wärmeträgers in der Speicherfläche 31 relativ groß, so dass eine gute Wärmeübertragung zwischen dem gasförmigen Wärmeträger und dem Speichermaterial 40 in den Speicherflächen 31 stattfinden kann.

Des Weiteren wird auch deutlich, beim Betrachten der Figur 4, dass, weil die Dicke der Speicherflächen 31 relativ gering ist, der Strömungsweg des Wärmeträgers durch die Speicherflächen 31 relativ kurz ist, was sich ebenfalls positiv auf den Druckverlust des Wärmeträgers beim Durchströmen der Speicherwände 31 auswirkt.

In Figur 4 ist das Beladen des Speichermoduls 29 dargestellt. Wenn das Speichermodul entladen werden soll, kann dies beispielsweise dadurch erfolgen, dass die Strömungsrichtung umgekehrt wird und durch die Ableitung 18 kalte Luft in das Speichermodul 29 gefördert wird. Diese kalte Luft strömt entgegen der Strömungsrichtung beim Beladen des Speichermoduls 29. Durch die Speicherwände 31 nimmt dabei die dort eingespeicherte sensible Wärme größten Teils auf und verlässt als heißer Wärmeträger das Gehäuse 16 über die Zuleitung 17. Selbstverständlich ist es auch möglich und in vielen Anwendungsfällen auch vorteilhaft, wenn das Beladen und Entladen des Speichermoduls über separate Zuleitungen und Ableitungen erfolgt, wie dies beispielsweise anhand der Figuren 1 und 2 erläutert wurde. Diese zusätzlichen Zu- und Ableitungen sind in der Figur 4 nicht dargestellt.

In der Figur 5 ist ein erstes Ausführungsbeispiel einer Speicherfläche vergrößert und in einem Vertikalschnitt dargestellt.

Die Filterfläche 31 wird unten von einem Boden 41 und oben von einer Decke 43 des Gehäuses 16 begrenzt. Damit das Speichermaterial, welches in Figur 5 als Kieselsteine dargestellt ist, nicht der Schwerkraft folgend nach unten wegrutscht, sind an der Eintrittsfläche 37 und an der Austrittsfläche 39 jeweils ein Lochblech oder ein Gitter 45 angeordnet. Dieses Lochblech oder Gitter 45 muss hinsichtlich seiner Maschenweite bzw. der Größe der Löcher so auf das Speichermaterial abgestimmt sein, dass das Speichermaterial nicht durch die Löcher bzw. das Gitter 45 gelangen kann. Gleichzeitig ist dabei darauf zu achten, dass der Strömungswiderstand durch das Gitter 45 bzw. das Lochblech nur so wenig wie möglich ansteigt. Es ist auch denkbar, ein stabiles Gitter 45 mit einer großen Maschenweite vorzusehen und zwischen dem Speichermaterial und diesem Gitter 45 noch ein Vlies oder ein Gitter mit einer sehr viel kleineren Maschenweite anzuordnen (nicht dargestellt).

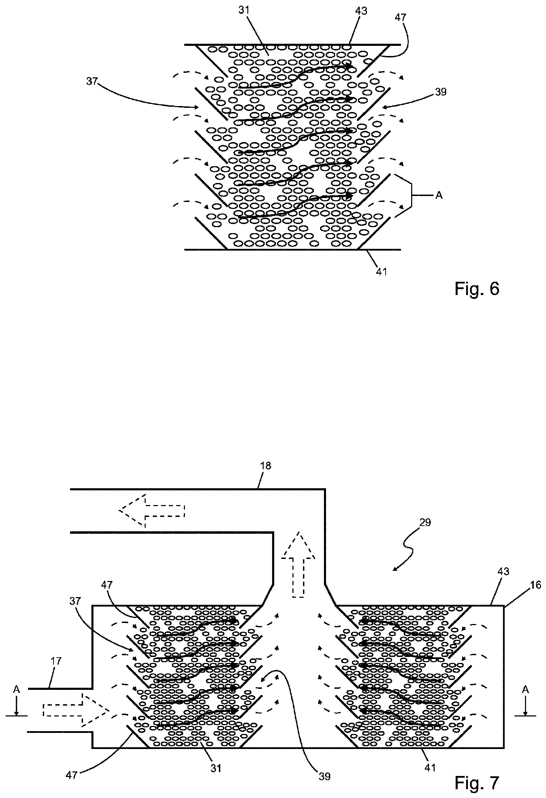

In Figur 6 ist ein weiteres Ausführungsbeispiel einer Speicherwand 31 dargestellt. Bei diesem Ausführungsbeispiel kann auf ein Lochblech bzw. ein Gitter 45 verzichtet werden, weil an der Eintrittsfläche 37 und der Austrittsfläche 39 eine Vielzahl von Lamellen 47 vertikal übereinander angeordnet ist.

Diese Lamellen 47, deren Längsachse senkrecht zur Zeichenebene verläuft, sind schräg geneigt und zwar so, dass das Speichermaterial nicht nach außen fällt. Der Strömungswiderstand des Wärmeträgers durch eine solche Speicherwand 31 mit den Lamellen 47 ist sehr gering. Außerdem lässt sich eine solche Speicherfläche 31 sehr einfach vor Ort herstellen, indem eine Tragstruktur (nicht dargestellt) für die Lamellen 47 in dem Gehäuse 16 aufgebaut wird. Anschließend wird der Zwischenraum zwischen den Lamellen 47 mit dem Speichermaterial befüllt. Die Schrägstellung der Lamellen 47 muss so sein, dass einerseits kein Speichermaterial seitlich aus der Speicherwand herausfällt. Andererseits ist darauf zu achten, dass der Abstand der Lamellen 47 in vertikaler Richtung nur nicht zu groß wird, damit auf die Wandstärke die Dicke der Speicherwand 31 relativ konstant bleibt. Wenn nämlich die Wandstärke aufgrund des Schüttwinkels des Speichermaterials bereichsweise zu stark abnimmt, dann strömt der Wärmeträger, wie durch die durchgezogenen Pfeile in Figur 6 angedeutet, bevorzugt durch diesen dünneren Bereich der Speicherwand und die anderen Bereiche auf Höhe der Lamellen 47 werden nur wenig durchströmt.

Der Abstand A ist zudem abhängig von der Lamellenlänge und dem Neigungswinkel der Lamellen. Vorteilhaft kann eine zueinander versetzte Anordnung zwischen den Lamellen der Anströmseite und denen der Abströmseite sein.

Der vertikale Abstand A zwischen zwei Lamellen 47 ist somit ein wichtiger Parameter für die Ausgestaltung einer Speicherfläche 31.

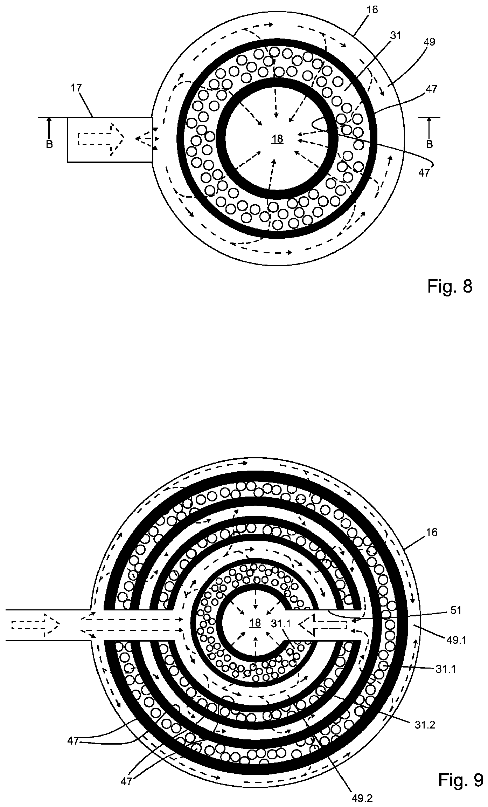

Figur 7 zeigt einen Vertikalschnitt durch ein Ausführungsbeispiel eines Speichermoduls 29, dessen Gehäuse 16 in der Draufsicht zylindrisch ist. Die Speicherwand 31 ist kreisringförmig ausgebildet und wird durch die zuvor beschriebenen Lamellen 47 in radialer Richtung begrenzt. Die Speicherwand 31 ist, wie sich auch aus dem Schnitt entlang der Linie A-A in Figur 8 ergibt, kreisringförmig ausgebildet. Die Lamellen 47 sind bei diesem Ausführungsbeispiel ebenfalls kreisringförmig ausgebildet. Über die Zuleitung 17 strömt der heiße Wärmeträger in einen Ringraum, der außen vom Gehäuse 16 begrenzt wird und innen von der Speicherwand 31 begrenzt wird, in das Speichermodul 29 ein, strömt radial nach innen durch die Speicherwand 31 und verlässt über einen die zentral angeordnete Ableitung 18 das Speichermodul 29.

Aus dem Schnitt entlang der Ebene A-A in Figur 8 wird deutlich, dass auch hier eine sehr starke Verzögerung der durch die Zuleitung strömenden Wärmeträgers stattfindet und somit der Wärmeträger sehr langsam und mit geringen Druckverlusten durch die Speicherwand 31 strömen kann.

Des Weiteren ist ein großer Vorteil des Speichermoduls darin zu sehen, dass die Speicherflächen 31 letztendlich aus einem kostengünstigen Schüttgut bestehen, das durch eine einfache und in aller Regel metallische Struktur fixiert wird. Dadurch werden Probleme, wie zum Beispiel Spannungsrisse, die auf das regelmäßige Aufheizen und Abkühlen der Speicherschichten zurückzuführen wären, vermieden. Auch ist es ohne weiteres möglich, das Speichermaterial auszutauschen, wenn seine thermischen Eigenschaften aufgrund von Alterung nachlassen oder wenn sich die Betriebsbedingungen geändert haben.

In Figur 9 ist ein Schnitt durch ein weiteres Ausführungsbeispiel eines Speichermoduls 29 dargestellt, bei dem drei konzentrisch zueinander angeordnete Filterwände 31.1, 31.2, 31.3 vorhanden sind. Zwischen dem Gehäuse 16 und der äußersten Speicherwand 31.1 entsteht der bereits zuvor beschriebene zylindermantelförmige Zuströmkanal 49.1. Des Weiteren ist zwischen der zweiten Filterwand 31.2 und der dritten Filterwand 31.3 ein weiterer ringförmiger Raum 49.2 ausgebildet, der mit der Zuleitung 17 verbunden ist und somit mit heißem Wärmeträger beschickt wird. Aus diesen beiden Ringräumen 49.1 und 49.2 strömt der heiße Wärmeträger durch die Speicherwände 31.1, 31.2 und 31.3 und strömt in die zentral angeordnete Ableitung 18. Damit der abgekühlte Wärmeträger, der sich in einem dritten Ringraum 49.3 zwischen der ersten Speicherfläche 31.1 und der zweiten Speicherfläche 31.2 befindet, in die Ableitung 18 abgeleitet werden kann, ist ein Verbindungskanal 51 zur Ableitung 18 im Zentrum des Gehäuses 16 vorgesehen.

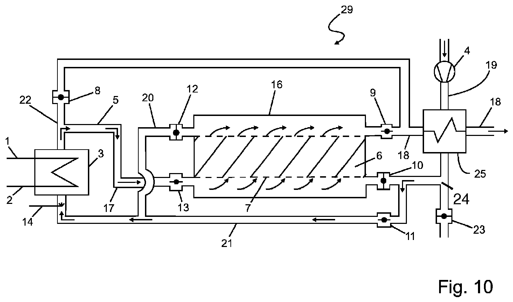

In Figur 10 ist eine Ausführungsform des erfindungsgemäßen Hochtemperatur-Wärmespeichers schematisch dargestellt. Es weist große Übereinstimmungen mit dem anhand der Figuren 1 bis 3 dargestellten Ausführungsbeispielen auf, so dass nur die zusätzlichen Bauteile an dieser Stelle erläutert werden.

In dem Hochtemperatur-Wärmespeicher ist ein regenerativer oder rekuperativer Luft/Luft-Wärmetauscher 25 vorhanden, der beim Beladen des Hochtemperatur-Wärmespeichers Wärme von der in der ersten Ableitung 18 strömenden noch warmen Abluft aus dem Speichermodul 29 auf die in der zweiten Zuleitung 19 strömenden (noch) kalten Umgebungsluft überträgt.

Dadurch werden die Wärmeverluste durch die über die erste Ableitung 18 das Speichermodul 29 verlassende Abluft drastisch reduziert und in Folge dessen der Speicherwirkungsgrad und die Leistungsfähigkeit des erfindungsgemäßen Hochtemperatur-Wärmespeichers verbessert.

Beim Entladen des Speichermoduls 29 werden die Klappen 8, 10 und 12 geöffnet und die Klappen 9, 11 und 13 geschlossen.

Die Klappe 23 wird so gesteuert wie im Zusammenhang mit der Figur 1b erläutert.

Damit wird die vom Gebläse 4 angesaugte Umgebungsluft über den Luft-Luft-Wärmetauscher 25 aufgeheizt, indem der Abluftstrom in der Ableitung 18 noch Restwärme vor Austritt aus dem System abgibt.

Der Abluftstrom kann Temperaturen von ca. 90 ° C bis 250° C haben, je nach Auslegung und Parameter.

Ein Großteil der Wärme kann über den Luft-Luft-Wärmetauscher 25 an die einströmende Umgebungsluft Luft übertragen und damit zurückgewonnen werden. Diese Wärme verbleibt im System und die Wärmeverlauste durch die über die Leitung 22 das Speichermodul 29 verlassende Abluft werden drastisch reduziert.

Der dazu benötigte Luft-Luft-Wärmetauscher 25 kann immer in einem guten Betriebspunkt gefahren werden, da die über die zweite Zuleitung 19 einströmende Luftmasse und die Masse der über die erste Ableitung 18 beziehungsweise die Leitung 22 strömende Abluft in erster Näherung gleich sind.

Damit können Wirkungsgrade und Leistungsfähigkeit des Hochtemperatur-Wärmespeichers 29 für die Einspeicherung und Ausspeicherung von deutlich über 90 % erreicht werden.

## Patentansprüche

1. Verfahren zur Speicherung von thermischer Energie in Form von Hochtemperaturwärme, wobei die Wärme über ein Medium, wie zum Beispiel Wasserdampf, Wasser, Thermoöl, und/oder flüssige Salze oder Salzmischungen, mittels eines Wärmetauschers (3) an Luft abgegeben wird, diese aufgewärmte Luft die Wärme zum Speichermedium (6) transportiert und dort die Wärme an das Speichermedium (6) abgibt, wobei die Luft, nachdem sie Wärme an das Speichermedium (6) abgegeben hat, das Speichermedium (6) als Abluft verlässt,
**dadurch gekennzeichnet, dass**
zum Beladen des Speichermediums (6) Umgebungsluft eingesetzt wird, dass die Umgebungsluft über ein Gebläse (4) aus der Umgebung entnommen wird, und dass die Umgebungsluft nach dem Gebläse (4) über einen Luft/Luft-Wärmetauscher (25) mit der das System verlassenden Abluft vorgewärmt wird.

2. Verfahren nach Patentanspruch 1, **dadurch gekennzeichnet, dass** zum Entladen des Speichermediums (6) Luft durch das Speichermedium (6) geleitet wird und dabei Wärme aufnimmt und diese aufgewärmte Luft dann zu dem Wärmetauscher (3) geführt wird, wo die Wärme wieder an ein Medium, wie zum Beispiel Wasserdampf, Wasser, Thermoöl und/oder flüssige Salze oder Salzmischungen, abgegeben wird, wobei zum Entladen des Speichermediums (6) Umgebungsluft eingesetzt wird, und wobei die Umgebungsluft über das Gebläse (4) aus der Umgebung entnommen wird, und wobei die Umgebungsluft nach dem Gebläse (4) über den Luft/Luft-Wärmetauscher (25) mit der das System verlassenden Abluft vorgewärmt wird.

3. Hochtemperatur-Wärmespeicher umfassend ein Speichermodul (29) mit einem Gehäuse (16), wobei das Gehäuse (16) mindestens teilweise mit einem Speichermedium (6) gefüllt ist, sowie außerhalb des Gehäuses (16) angeordnet einem ersten Wärmetauscher (3) mit einer warmen Seite und einer kalten Seite, einem Gebläse (4), einem Luft/Luft-Wärmetauscher (25), welcher Umgebungsluft mit der das Speichermodul (29) verlassenden Abluft vorwärmt, einer ersten Zuleitung (17), einer zweiten Zuleitung (19), einer ersten Ableitung (18) und einer zweiten Ableitung (20), wobei die erste Zuleitung (17), die zweite Zuleitung (19), die erste Ableitung (18) und die zweite Ableitung (20) mit dem Gehäuse (16) verbunden sind, einer ersten Bypass-Leitung (21) und einer zweiten Bypass-Leitung (22) sowie steuerbaren Klappen (8 - 13) in der der zweiten Bypass-Leitung (22), der ersten Zuleitung (17), der zweiten Zuleitung (19), der ersten und der zweiten Ableitung (18, 20) sowie der ersten Bypass-Leitung (21), wobei die steuerbaren Klappen (8, 9, 12,13) in der ersten und der zweiten Zuleitung (17, 19), der ersten und der zweiten Ableitung (18, 20) direkt vor dem Gehäuse (16) angeordnet sind, wobei die erste Bypass-Leitung (21) die zweite Zuleitung (19) mit der zweiten Ableitung (20) unter Umgehung des Gehäuses (16) verbindet, wobei die zweite Bypass-Leitung (22) die erste Zuleitung (17) mit der ersten Ableitung (18) unter Umgehung des Gehäuses (16) verbindet, wobei die zweite Ableitung (20) stromaufwärts der kalten Seite des ersten Wärmetauschers (3) mit der ersten Bypass-Leitung (21) verbunden ist, wobei das Gebläse (4) und die Klappen dazu eingerichtet sind, Umgebungsluft wahlweise durch die zweite Zuleitung (19), die erste Bypass-Leitung (21), die zweite Ableitung (20), den ersten Wärmetauscher (3) und die erste Zuleitung (17) in das Gehäuse (16) oder direkt durch die zweite Zuleitung (19) in das Gehäuse (16) zu fördern, wobei die erste Ableitung (18) und die zweite Zuleitung (19) mit dem Luft/Luft-Wärmetauscher (25) verbunden sind.

4. Hochtemperatur-Wärmespeicher nach Patentanspruch 3, **dadurch gekennzeichnet, dass** das Speichermedium (6) Sand, Kies, Steine, Korund und/oder Grafit mit durchschnittlichen Durchmessern von 2 bis 80 mm ist.

5. Hochtemperatur-Wärmespeicher nach Patentanspruch 3 oder 4, **dadurch gekennzeichnet, dass** das Speichermedium (6) horizontal oder vertikal geschichtet wird und jede Schicht einen anderen durchschnittlichen Durchmesser des Speichermediums und/oder unterschiedliche Materialien in jeder Schicht aufweisen kann.

6. Hochtemperatur-Wärmespeicher nach Patentanspruch 3 bis 5, **dadurch gekennzeichnet, dass** das Speichermedium (6) auf mehrere Einzelvolumen verteilt wird und diese nebeneinander oder auch übereinander angeordnet werden können oder als Kaskade angeordnet werden können.

7. Hochtemperatur-Wärmespeicher nach Patentanspruch 3 bis 6, **dadurch gekennzeichnet, dass** die Luft in das Speichermedium (6) über Lanzen mit Schlitz- und oder Lochöffnungen eingebracht wird.

8. Hochtemperatur-Wärmespeicher nach Patentanspruch 3 bis 7, **dadurch gekennzeichnet, dass** der Wärmetauscher (3) mit einer Zusatzfeuerung (14) für konventionelle Brennstoffe wie z. B. Öl oder Erdgas ausgestattet wird.

9. Hochtemperatur-Wärmespeicher nach Patentanspruch 3 bis 8, **dadurch gekennzeichnet, dass** der Luftstrom in der ersten Ableitung (18) nach der Wärmeabgabe im Wärmetauscher (3) beim Beladen des Wärmespeichers über den zweiten Wärmetauscher (25) die Restwärme an die in der ersten Bypass-Leitung (21) strömende Luft abgeben kann.

10. Hochtemperatur-Wärmespeicher nach Patentanspruch 3 bis 9, **dadurch gekennzeichnet, dass** der Luftstrom in der zweiten Bypass-Leitung (22) beim Entladen die Restwärme an die in der zweiten Zuleitung (19) strömende Luft abgeben kann.

11. Hochtemperatur-Wärmespeicher nach Patentanspruch 3 bis 10, **dadurch gekennzeichnet, dass** in die zweite Zuleitung (19) eine Leitung (24) mündet, und dass durch die Leitung (24) Heißluft, insbesondere solar erzeugte Heißluft, oder heiße Abgase, insbesondere Abgase einer Gasturbine, in die zweite Zuleitung (19) förderbar ist.

12. Hochtemperatur-Wärmespeicher nach Patentanspruch 11, **dadurch gekennzeichnet, dass** die Leitung (24) stromabwärts des Gebläses (4) in die zweite Zuleitung (19) mündet.

13. Hochtemperatur-Wärmespeicher nach Patentanspruch 3 bis 12, **dadurch gekennzeichnet, dass** in der Leitung (24) eine steuerbare Klappe (23) vorgesehen ist.

14. Hochtemperatur-Wärmespeicher nach Patentanspruch 3 bis 13, **dadurch gekennzeichnet, dass** ein Speicherabschnitt oder eine Speicherschicht des Speichermoduls (29) mit Kugeln aufgefüllt wird, die mit einem Phasenwechselmaterial (PCM) gefüllt sind.

15. Hochtemperatur-Wärmespeicher nach Patentanspruch 3 bis 14, **dadurch gekennzeichnet, dass** ein Speicherabschnitt oder eine Speicherschicht des Speichermoduls (29) mit thermochemischen Speicherelementen und Speichermaterialien wie zum Beispiel Zeolithe oder Metallhydride Kugeln oder Materialien wie z.B. CaO oder Ca(OH)₂ gefüllt sind.

16. Hochtemperatur-Wärmespeicher nach Patentanspruch 14 bis 15, **dadurch gekennzeichnet, dass** jede Speicherschicht (31) eine Eintrittsfläche (37) und eine Austrittsfläche (39) aufweist, und dass die Speicherschichten (31) an den Eintrittsflächen (37) und/oder den Austrittsflächen (39) durch ein Netz, ein Gitter, eine Lochblech und/oder ein Vlies begrenzt wird.

17. Hochtemperatur-Wärmespeicher nach einem der Ansprüche 14 bis 16, **dadurch gekennzeichnet, dass** die Speicherschichten (31) als vertikale oder horizontale Wand ausgebildet sind, in Form eines Quaders, Parallelepipeds, Zylinders, Hohlzylinders oder als Wand mit spiralförmiger Grundfläche.

18. Hochtemperatur-Wärmespeicher nach Patentanspruch 17, **dadurch gekennzeichnet, dass** die Speicherschichten (31) von mehreren Lamellen (47) umfasst oder begrenzt werden, und dass die Lamellen (47) in vertikaler Richtung übereinander angeordnet sind.

19. Hochtemperatur-Wärmespeicher nach einem der Ansprüche 3 bis 18, **dadurch gekennzeichnet, dass** das Speichermedium horizontal oder vertikal geschichtet wird und jede Schicht einen anderen durchschnittlichen Durchmesser des Speichermaterials und/oder ein anderes Speichermaterial aufweist.

20. Hochtemperatur-Wärmespeicher nach einem der Ansprüche 14 bis 18, **dadurch gekennzeichnet, dass** innerhalb der Speicherschichten (31) eine ein Raumgitter bildende Struktur aus kleinen Röhrchen, Raschigringen, dreidimensionalen Gitternetzen oder anderen Füllkörpern durchsetzt wird, um sicherzustellen, dass das Speichermaterial mit der Zeit nicht verdichtet und der Druckverlust durch das Speichermaterial sich nicht erhöht.

21. Hochtemperatur-Wärmespeicher nach einem der Ansprüche 3 bis 20, **dadurch gekennzeichnet, dass** mehrere zylindrische Speicherwände (31.1, 31.2, 31.3) konzentrisch zueinander angeordnet sind.

22. Hochtemperatur-Wärmespeicher nach einem der Ansprüche 3 bis 21, **dadurch gekennzeichnet, dass** das Gehäuse (16) mindestens eine seitliche Zuleitung (17) oder mindestens eine seitliche Ableitung (18) für den Wärmeträger hat.

23. Hochtemperatur-Wärmespeicher nach einem der Ansprüche 3 bis 22, **dadurch gekennzeichnet, dass** die erste und zweite Zuleitung (17, 19) oder die erste und zweite Ableitung (18, 20) für den Wärmeträger an einem Boden (41) und/oder einer Decke (43) mit dem Gehäuse (16) verbunden sind.

24. Hochtemperatur-Wärmespeicher nach einem der Ansprüche 3 bis 23, **dadurch gekennzeichnet, dass** das Gehäuse (16) an seiner Innenseite mit einer Schicht Speichermaterial bedeckt ist.

25. Hochtemperatur-Wärmespeicher nach einem der Ansprüche 3 bis 24, **dadurch gekennzeichnet, dass** mehrere Speichermodule (29) in Reihenschaltung oder Parallelschaltung angeordnet werden können.

26. Hochtemperatur-Wärmespeicher nach einem der Ansprüche 3 bis 25, **dadurch gekennzeichnet, dass** das Gehäuse (16) in modularer Container-Bauweise in Standard-Containergröße und/oder in Tank-Containergröße ausgeführt ist.

27. Hochtemperatur-Wärmespeicher nach einem der Ansprüche 14 bis 15 **dadurch gekennzeichnet, dass** die mindestens eine der Speicherschichten (31) als zylindrische Speicherwand (31.1, 31.2, 31.3), als spiralförmige Speicherwand, als Quader oder Parallelepiped ausgebildet ist.

## Claims

1. Method for storing thermal energy in the form of high-temperature heat, wherein the heat is transferred by means of a medium, for example, water vapor, water, thermal oil, and/or liquid salts or salt mixtures, by means of a heat exchanger (3) to air, this heated air transports the heat to the storage medium (6), and thereat releases the heat to the storage medium (6), whereby the air, having released heat to the storage medium (6) leaves the storage medium (6) as exhaust air, **characterized in that**
for loading the storage medium (6) ambient air is used, that the ambient air is taken from the environment via a blower (4), and that the ambient air behind the blower (4) is preheated via an air/air heat exchanger (25) with the exhaust air leaving the system.

2. Method according to claim 1, **characterized in that** for discharging the storage medium (6) air is passed through the storage medium (6) and, in doing so, absorbs heat and this heated air is then guided to the heat exchanger (3) where the heat is then transferred again onto a medium, for example, water vapor, water, thermal oil, and/or liquid salts or salt mixtures, wherein for discharging the storage medium (6) ambient air is used and wherein the ambient air is taken from the environment via the blower (4), and wherein the ambient air behind the blower (4) is preheated via an air/air heat exchanger (25) with the exhaust air leaving the system.

3. High-temperature heat store comprising a storage module (29) with a housing (16), wherein the housing (16) is at least partially filled with a storage medium (6), as well as, arranged outside of the housing (16), a first heat exchanger (3) with a warm side and a cold side, a blower (4), an air/air heat exchanger (25) which preheats ambient air with the exhaust air leaving the storage medium (29), a first feed line (17), a second feed line (19) a first discharge line (18) and a second discharge line (20), wherein the first feed line (17), the second feed line (19), the first discharge line (18) and the second discharge line (20) are connected to the housing (16), a first bypass-line (21), and a second bypass-line (22) as well as controllable flaps (8-13) in the second bypass-line (22), the first feed line (17), the second feed line (19), the first and the second discharge line (18, 20) as well as the first bypass-line (21), wherein the controllable flaps (8, 9, 12, 13) in the first and the second feed line (17, 19), the first and the second discharge line (18, 20) are arranged directly before the housing (16), wherein the first bypass-line (21) connects the second feed line (19) with the second discharge line (20) bypassing the housing (16), wherein the second bypass-line (22) connects the first feed line (17) with the first discharge line (18) bypassing the blower (16), wherein the second discharge line (20) upstream of the cold side of the first heat exchanger (3) is connected with the first bypass-line (21), wherein the blower (4) and the flaps are furnished such as to transport ambient air optionally through the second feed line (19), the first bypass-line (21), the second discharge line (20), the first heat exchanger (3) and the first feed line (17) into the housing (16) or directly through the second feed line (19) into the housing (16), wherein the first discharge line (18) and the second feed line (19) are connected with the air/air heat exchanger (25).

4. High-temperature heat store according to claim 3, **characterized in that** the storage medium (6) is sand, gravel, stones, corundum and/or graphite with average diameters of 2 to 80 mm.

5. High-temperature heat store according to claim 3 or 4, **characterized in that** the storage medium (6) is layered horizontally or vertically and each layer can have a different average diameter of the storage medium and/or can have different materials in each layer.

6. High-temperature heat store according to claim 3 to 5, **characterized in that** the storage medium (6) is distributed onto several individual volumes and the latter can be arranged adjacent to each other or on top of each other or arranged as a cascade.

7. High-temperature heat store according to claim 3 to 6, **characterized in that** the air is introduced into the storage medium (6) via lances with slotted openings and/or hole openings.

8. High-temperature heat store according to claim 3 to 7, **characterized in that** the heat exchanger (3) is furnished with an auxiliary firing (14) for conventional fuels such as e.g. oil or natural gas.

9. High-temperature heat store according to claim 3 to 8, **characterized in that** the air stream in the first discharge line (18) after heat transfer in the heat exchanger (3) during charging of the heat store can transfer the residual heat via the second heat exchanger to the air that is flowing in the first bypass-line (21).

10. High-temperature heat store according to claim 3 to 9, **characterized in that** the air stream in the second bypass-line (22) during discharging can transfer the residual heat onto the air that is flowing in the second feed line (19).

11. High-temperature heat store according to claim 3 to 10, **characterized in that** a conduit (24) opens into the second feed line (19) and that through the conduit (24) hot air, in particular hot air generated by solar energy or hot exhaust gases, in particular exhaust gases of a gas turbine, can be conveyed into the second feed line (19) .

12. High-temperature heat store according to claim 11, **characterized in that** the conduit (24) opens into the second feed line (19) downstream of the blower (4).

13. High-temperature heat store according to claims 3 to 12, **characterized in that** in the conduit (24) a controllable flap (23) is provided.

14. High-temperature heat store according to claims 3 to 13, **characterized in that** a storage section or a storage layer of the storage module (29) is filled with spheres that are filled with a phase change material (PCM).

15. High-temperature heat store according to claims 3 to 14, **characterized in that** a storage section or a storage layer of the storage module (29) is filled with thermochemical storage elements and storage materials such as zeolites or metal hydrides spheres or materials such as CaO or Ca(OH)₂.

16. High-temperature heat store according to claims 14 to 15, **characterized in that** each storage layer (31) has an inlet surface (37) and an outlet surface (39) and **in that** the storage layers (31) at the inlet surface (37) and/or the outlet surfaces (39) are delimited by a net, a lattice, a perforate metal plate, and/or a nonwoven.

17. High-temperature heat store according to one of the claims 14 to 16, **characterized in that** the storage layers (31) are formed as vertical or horizontal walls, in the form of a cuboid, parallelepiped, cylinder, hollow cylinder or a wall with spiral-shaped base surface.

18. High-temperature heat store according to claim 17, **characterized in that** the storage surfaces (31) are enclosed or delimited by several fins (47) and **in that** the fins (47) in vertical direction are arranged on top of each other.

19. High-temperature heat store according to one of the claims 3 to 18, **characterized in that** the storage material is layered horizontally or vertically and each layer comprises a different average diameter of the storage material and/or a different storage material.

20. High-temperature heat store according to one of the claims 14 to 18, **characterized in that** within the storage surfaces (31) a structure forming a spatial grid and comprised of small tubes, Raschig rings, three dimensional networks or other filler bodies is penetrated, in order to ensure that the storage material does not compact over time and the pressure loss through the storage material does not increase.

21. High-temperature heat store according to one of the claims 3 to 20, **characterized in that** several cylindrical store walls (31.1, 31.2, 31.3) are arranged concentrically relative to each other.

22. High-temperature heat store according to one of the claims 3 to 21, **characterized in that** the housing (16) has at least one lateral feed line (17) or at least one lateral discharge line (18) for the heat carrier.

23. High-temperature heat store according to one of the claims 3 to 22, **characterized in that** the first and second feed line (17, 19) or the first and second discharge line (18, 20) for the heat carrier are connected with the housing (16) at a bottom (41) and/or a cover (16).

24. High-temperature heat store according to one of the claims 3 to 23, **characterized in that** the housing (16) is covered on its inner side with a layer of storage material.

25. High-temperature heat store according to one of the claims 3 to 24, **characterized in that** several storage modules (29) can be arranged in serial connection or parallel connection.

26. High-temperature heat store according to one of the claims 3 to 25 **characterized in that** the housing (16) is embodied in modular container configuration in standard container size and/or in tank container size.

27. High-temperature heat store according to one of the claims 14 to 15, **characterized in that** the at least one storage surface (31) is embodied as a cylindrical storage wall (31.1, 31.2, 31.3), as a spiral-shaped storage wall, as a cuboid or parallelepiped.

## Revendications

1. Méthode de stockage d'énergie thermique sous forme de chaleur haute température, dans laquelle la chaleur est délivrée dans l'air via un milieu, tel que par exemple de la vapeur d'eau, de l'eau, de l'huile thermique et/ou des sels fluides ou des mélanges de sels, au moyen d'un échangeur de chaleur (3), cet air chauffé transporte la chaleur vers le milieu de stockage (6) et délivre la chaleur au milieu de stockage (6), dans laquelle l'air, après qu'il ait délivré de la chaleur au milieu de stockage (6), quitte le milieu de stockage (6) sous la forme d'air sortant,
**caractérisée en ce que**
l'air ambiant sert à charger le milieu de stockage (6), l'air ambiant est prélevé dans l'environnement via un ventilateur (4) et l'air ambiant, après le ventilateur (4), est préchauffé via un échangeur de chaleur air/air (25) avec l'air d'échappement quittant le système.

2. Méthode selon la revendication 1, **caractérisée en ce que** pour décharger le milieu de stockage (6), de l'air est amené à passer à travers le milieu de stockage (6) et absorbe ainsi de la chaleur, puis cet air chauffé est ensuite guidé vers l'échangeur de chaleur (3), où la chaleur est délivrée à nouveau dans un milieu, comme par exemple de la vapeur d'eau, de l'eau, de l'huile thermique et/ou des sels fluides ou des mélanges de sels, dans laquelle l'air ambiant est utilisé pour décharger le milieu de stockage (6), et dans laquelle l'air ambiant via le ventilateur (4) est prélevé dans l'environnement, et dans laquelle l'air ambiant, après le ventilateur (4), est préchauffé via un échangeur de chaleur air/air (25) avec l'air sortant quittant le système.

3. Accumulateur de chaleur haute température comprenant un module de stockage (29) avec un boîtier (16), dans lequel le boîtier (16) est au moins partiellement rempli d'un milieu de stockage (6), ainsi qu'un premier échangeur de chaleur (3) doté d'un côté chaud et d'un côté froid agencé à l'extérieur du boîtier (16), un ventilateur (4), un échangeur de chaleur air/air (25), qui préchauffe l'air ambiant avec l'air sortant quittant le module de stockage (29), une première conduite d'alimentation (17), une seconde conduite d'alimentation (19), une première conduite de décharge (18) et une seconde conduite de décharge (20), dans lequel la première conduite d'alimentation (17), la seconde conduite d'alimentation (19), la première conduite de décharge (18) et la seconde conduite de décharge (20) sont reliées au boîtier (16), une première conduite de dérivation (21) et une seconde conduite de dérivation (22) ainsi que des clapets pouvant être commandés (8-13) dans la seconde conduite de dérivation (22), la première conduite d'alimentation (17), la seconde conduite d'alimentation (19), les première et seconde conduite de décharge (18, 20) ainsi que la première conduite de dérivation (21), dans lequel les volets pouvant être commandés (8, 9, 12, 13) sont agencés dans les première et seconde conduites d'alimentation (17, 19), et les première et seconde conduites de décharge (18, 20) directement devant le boîtier (16), dans lequel la première conduite de dérivation (21) relie la seconde conduite d'alimentation (19) à la seconde conduite de décharge (20) en contournant le boîtier (16), dans lequel la seconde conduite de dérivation (22) relie la première conduite d'alimentation (17) à la première conduite de décharge (18) en contournant le boîtier (16), dans lequel la seconde conduite de décharge (20) est reliée en amont du côté froid du premier échangeur de chaleur (3) à la première conduite de dérivation (21), dans lequel le ventilateur (4) et les volets sont conçus pour transporter sélectivement l'air ambiant à travers la seconde conduite d'alimentation (19), la première conduite de dérivation (21), la seconde conduite de décharge (20), le premier échangeur de chaleur (3) et la première conduite d'alimentation (17) dans le boîtier (16) ou directement à travers la seconde conduite d'alimentation (19) dans le boîtier (16), dans lequel la première conduite de décharge (18) et la seconde conduite d'alimentation (19) sont reliées à l'échangeur de chaleur air/air (25).

4. Accumulateur de chaleur haute température selon la revendication 3, **caractérisé en ce que** le milieu de stockage (6) est du sable, du gravier, des cailloux, du corindon et/ou du graphite avec des diamètres moyens de 2 à 80 mm.

5. Accumulateur de chaleur haute température selon la revendication 3 ou 4, **caractérisé en ce que** le milieu de stockage (6) est stratifié horizontalement ou verticalement, et chaque couche peut présenter un autre diamètre moyen du milieu de stockage et/ou des matériaux différents dans chaque couche.

6. Accumulateur de chaleur haute température selon les revendications 3 à 5, **caractérisé en ce que** le milieu de stockage (6) est réparti en plusieurs volumes individuels, et ceux-ci peuvent être agencés les uns à côté des autres ou les uns au-dessus des autres, ou peuvent être agencés en cascade.

7. Accumulateur de chaleur haute température selon les revendications 3 à 6, **caractérisé en ce que** l'air est introduit dans le milieu de stockage (6) par l'intermédiaire de lances à fentes et/ou à trous.

8. Accumulateur de chaleur haute température selon les revendications 3 à 7, **caractérisé en ce que** l'échangeur de chaleur (3) est équipé d'un dispositif de combustion supplémentaire (14) pour des combustibles habituels comme par exemple du pétrole ou du gaz naturel.

9. Accumulateur de chaleur haute température selon les revendications 3 à 8, **caractérisé en ce que** le flux d'air dans la première conduite de décharge (18), après la délivrance de chaleur dans l'échangeur de chaleur (3) lors du chargement de l'accumulateur de chaleur via le second échangeur de chaleur (25), peut délivrer la chaleur résiduelle dans l'air s'écoulant dans la première conduite de dérivation (21).

10. Accumulateur de chaleur haute température selon les revendications 3 à 9, **caractérisé en ce que** le flux d'air peut être délivré dans la seconde conduite de dérivation (22) en déchargeant la chaleur résiduelle dans l'air circulant dans la seconde conduite d'alimentation (19).

11. Accumulateur de chaleur haute température selon les revendications 3 à 10, **caractérisé en ce qu'**une conduite (24) débouche dans la seconde conduite d'alimentation (19), et **en ce que** via la conduite (24), de l'air chaud, en particulier de l'air chaud solaire ou des gaz d'échappement chauds, en particulier des gaz d'échappement d'une turbine à gaz, peut/peuvent être transporté(s) dans la seconde conduite d'alimentation (19) .

12. Accumulateur de chaleur haute température selon la revendication 11, **caractérisé en ce que** la conduite (24) en aval du ventilateur (4) débouche dans la seconde conduite d'alimentation (19).

13. Accumulateur de chaleur haute température selon les revendications 3 à 12, **caractérisé en ce qu'**un volet pouvant être commandé (23) est prévu dans la conduite (24).

14. Accumulateur de chaleur haute température selon les revendications 3 à 13, **caractérisé en ce qu'**une section de stockage ou une couche de stockage du module de stockage (29) est remplie de billes, qui sont remplies d'un matériau à changement de phase (PCM).

15. Accumulateur de chaleur haute température selon les revendications 3 à 14, **caractérisé en ce qu'**une section de stockage ou une couche de stockage du module de stockage (29) est remplie d'éléments de stockage thermochimiques et de matériaux de stockage, comme par exemple une zéolithe ou des billes d'hydrure métallique, ou de matériaux comme par exemple CaO ou Ca(OH)₂.

16. Accumulateur de chaleur haute température selon les revendications 14 à 15, **caractérisé en ce que** chaque couche de stockage (31) présente une surface d'entrée (37) et une surface de sortie (39), et **en ce que** les couches de stockage (31) sont délimitées au niveau des surfaces d'entrée (37) et/ou des surfaces de sortie (39) à travers un tamis, un treillis, une tôle perforée et/ou un voile.

17. Accumulateur de chaleur haute température selon l'une des revendications 14 à 16, **caractérisé en ce que** les couches de stockage (31) se présentent sous la forme d'une paroi verticale ou horizontale, en forme de cuboïde, de parallélépipède, de cylindre, de cylindre creux ou sous la forme d'une paroi à surface de base en forme de spirale.

18. Accumulateur de chaleur haute température selon la revendication 17, **caractérisé en ce que** les couches de stockage (31) présentent ou sont délimitées par plusieurs lames, et **en ce que** les lames (47) sont agencées dans une direction verticale les unes au-dessus des autres.

19. Accumulateur de chaleur haute température selon l'une des revendications 3 à 18, **caractérisé en ce que** le milieu de stockage (6) est stratifié horizontalement ou verticalement, et chaque couche peut présenter un autre diamètre moyen du matériau de stockage et/ou d'un autre matériau de stockage.

20. Accumulateur de chaleur haute température selon l'une des revendications 14 à 18, **caractérisé en ce que** les couches de stockage (31) sont traversées intérieurement par une structure formant une grille spatiale constituée de petits tubes, d'anneaux de Raschig, de treillis tridimensionnels ou d'autres corps de garnissage, afin de garantir que le matériau de stockage ne devienne pas compact au cours du temps, et que la perte de pression à travers le matériau de stockage n'augmente pas.

21. Accumulateur de chaleur haute température selon les revendications 3 à 20, **caractérisé en ce que** plusieurs parois de stockage cylindriques (31.1, 31.2, 31.3) sont agencées concentriquement les unes par rapport aux autres.

22. Accumulateur de chaleur haute température selon l'une des revendications 3 à 21, **caractérisé en ce que** le boîtier (16) comporte au moins une conduite d'alimentation latérale (17) ou au moins une conduite de décharge latérale (18) pour l'agent caloporteur.

23. Accumulateur de chaleur haute température selon l'une quelconque des revendications 3 à 22, **caractérisé en ce que** les première et seconde conduites d'alimentation (17, 19) ou les première et seconde conduite de décharge (18, 20) pour le fluide caloporteur sont reliées au boîtier (16) au niveau d'un plancher (41) et/ou d'un plafond (43) .

24. Accumulateur de chaleur haute température selon l'une quelconque des revendications 3 à 23, **caractérisé en ce que** le boîtier (16) est recouvert d'une couche de matériau de stockage au niveau d'un côté intérieur.

25. Accumulateur de chaleur haute température selon l'une des revendications 3 à 24, **caractérisé en ce que** plusieurs modules de stockage (29) peuvent être agencés connectées en série ou connectés en parallèle.

26. Accumulateur de chaleur haute température selon l'une des revendications 3 à 25, **caractérisé en ce que** le boîtier (16) est réalisé avec la conception d'un conteneur modulaire de la taille d'un conteneur standard et/ou de la taille d'un conteneur citerne.

27. Accumulateur de chaleur haute température selon l'une des revendications 14 à 15, **caractérisé en ce que** la au moins une des couches de stockage (31) est réalisée sous la forme d'une paroi de stockage cylindrique (31.1, 31.2, 31.3), sous la forme d'un cuboïde ou d'un parallélépipède.
